# EUROPEAN PATENT APPLICATION

(11) **EP 1 811 431 A1**
(43) Date of publication of application: **25.07.2007**
(21) Application number: 05767086.1
(22) Date of filing: 28.07.2005
(51) Int. Cl.: G06K 19/00, G06K 17/00, G06K 7/00, G06T 17/40, A63F 1/02, A63H 3/36

(54) **INFORMATION PROCESSING SYSTEM, AND INFORMATION PROCESSING METHOD**

(30) Priority: 28.07.2004 JP 2004220518
(71) Applicant: SONY CORPORATION, Tokyo 141-0001 (JP)
(72) Inventor: NATSUME, Tetsu, Shinagawa-ku, Tokyo (JP); YOSHIMURA, Tsukasa, Shinagawa-ku, Tokyo (JP)
(74) Representative: Müller, Frithjof E.
(86) International application number: PCT/JP2005/013845
(87) International publication number: WO 2006/011556

(57) **Abstract**

An information processing system is provided, which is capable of easily changing a two-dimensional bar code at a low cost, and further capable of detecting the change and creating a computer graphics image corresponding to the change.

An object (10) to be imaged has a display section (11) thereon for displaying and making changeable part of a two-dimensional bar code (10a) arranged on the object (10). An information processing apparatus (20) detects the two-dimensional bar code (10a) from a captured image obtained by imaging the object, and creates and outputs a computer graphics image corresponding to the two-dimensional bar code (10a). If the object (10) changes the two-dimensional bar code (10a), the information processing apparatus (20) creates and outputs a computer graphics image corresponding to the change.

## Description

### TECHNICAL FIELD

The present invention relates to an information processing system and an information processing method, and particularly to an information processing system and an information processing method in which a two-dimensional bar code is identified to display a computer graphics image.

### BACKGROUND ART

A technology has heretofore been available, in which a two-dimensional bar code printed on a card or a paper medium is imaged by a camera, its pattern is read, and a computer graphics (hereinafter expressed as CG) image corresponding to the pattern is displayed on a screen of a television or the like, as if a three-dimensional object existed on the two-dimensional bar code (see, e.g., Japanese Patent Application Publication No. 2000-322602).

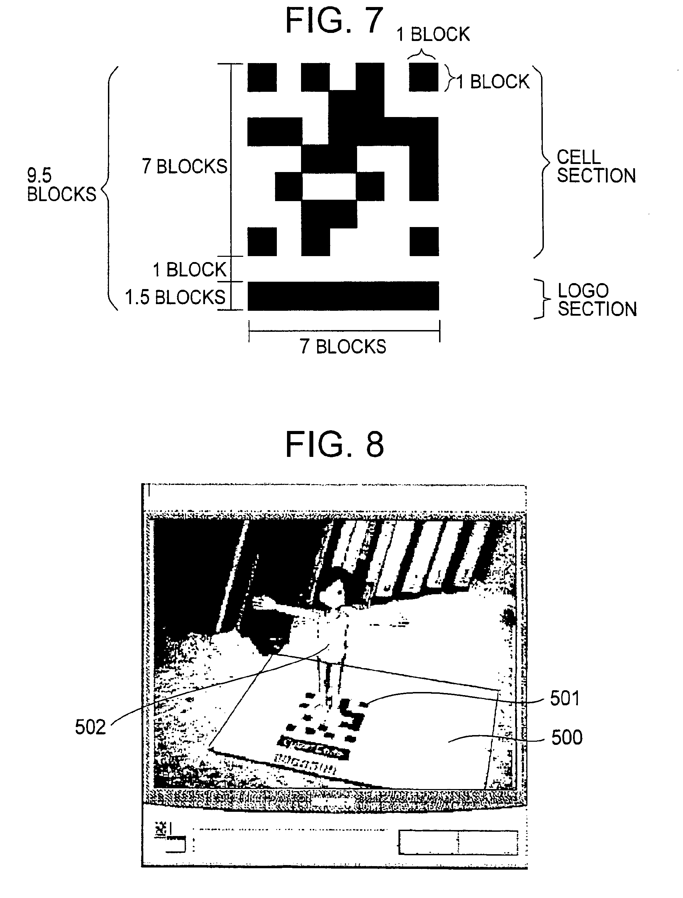

Fig. 7 shows an example of a two-dimensional bar code.
The two-dimensional bar code uses one block as one unit, and includes a cell section and a logo section, which are one block spaced apart from each other, within a rectangle whose size is 9.5 blocks in the vertical direction and 7 blocks in the horizontal direction. In the cell section, a plurality of square cells (black portions) are arranged two-dimensionally within a range of 7x7 blocks according to a predetermined arraying ,rule. The arraying pattern is used to record predetermined codes. Meanwhile, the logo section is formed of cells extending 1.5 blocks in the vertical direction and 7 blocks in the horizontal direction, whereby to describe the name of an object, an advertisement mark (logo), or the like therein. In such a two-dimensional bar code, a cell is arranged at each of the four corners in the cell section. No cell is disposed in three blocks surrounding each corner cell. With this arrangement, it becomes possible to recognize a single two-dimensional bar code. The orientation of the two-dimensional bar code can be recognized by defining the logo section as being always located at the bottom of the two-dimensional bar code.

Fig. 8 shows an example of a screen in which a two-dimensional bar code has been identified and shown in CG representation.
In this way, a representation can be realized, in which, e.g., a two-dimensional bar code 501 printed on a card 500 is identified by a camera, and a CG image 502 created as corresponding to its ID is composed at the position of the identified two-dimensional bar code 501.

### DISCLOSURE OF THE INVENTION

However, the conventional two-dimensional bar code is usually printed on a paper medium, and if the bar code is changed, it must be printed again, imposing a problem that labor and cost are entailed.
The present invention has been made in view of such circumstances, and an object thereof is, therefore, to provide an information processing system capable of easily changing a two-dimensional bar code at a low cost, and further capable of detecting such a change and creating a computer graphics image corresponding to the change.

Furthermore, another object of the present invention is to provide an information processing method capable of detecting a change of a two-dimensional bar code and creating a computer graphics image corresponding to the change.

In order to achieve the above objects, in the present invention, an information processing system is provided, which identifies a two-dimensional bar code and displays a computer graphics image. The information processing system is characterized by having an object that has the two-dimensional bar code arranged thereon, and has a display section thereon for displaying and making part of the two-dimensional bar code changeable, and an information processing apparatus that detects the two-dimensional bar code from a captured image obtained by imaging the object, that creates and outputs a computer graphics image corresponding to the two-dimensional bar code, and that if the object changes the two-dimensional bar code, creates and outputs a computer graphics image corresponding to the change.

According to the above configuration, the object for imaging has a display section thereon for displaying and making part of a two-dimensional bar code that is arranged on the object changeable, and the information processing apparatus detects the two-dimensional bar code from the captured image obtained by imaging the object, and creates and outputs the computer graphics image corresponding to the two-dimensional bar code. If the object changes the two-dimensional bar code, the information processing apparatus creates and outputs a computer graphics image corresponding to the change.

In the present invention, the object to be imaged has the display section thereon for displaying and making part of a two-dimensional bar code that is arranged on the object changeable, and thus the two-dimensional bar code can be easily changed at a low cost. The information processing apparatus detects the two-dimensional bar code from a captured image obtained by imaging that object, creates and outputs a computer graphics image corresponding to the two-dimensional bar code. If the object changes the two-dimensional bar code, the information processing apparatus creates and outputs a computer graphics image corresponding to the change, and thus a computer graphics image corresponding to a state of the object can be expressed.

### BRIEF DESCRIPTION OF DRAWINGS

Fig. 1 is a diagram showing a general configuration of an information processing system of the present embodiment.
Fig. 2 is a flowchart illustrating two-dimensional bar code change processing.
Fig. 3 is a diagram showing an example in which a two-dimensional bar code is changed by a switch.
Fig. 4 is a diagram showing an example of function blocks of an object.
Fig. 5 shows a hardware configuration example of an information processing apparatus.
Fig. 6 is a flowchart for explaining the flow of processing performed by the information processing apparatus.
Fig. 7 shows an example of a two-dimensional bar code.
Fig. 8 shows an example of a screen in which a two-dimensional bar code is identified and shown in CG representation.

### BEST MODE FOR CARRYING OUT THE INVENTION

An embodiment of the present invention will be described below in detail with reference to the drawings.

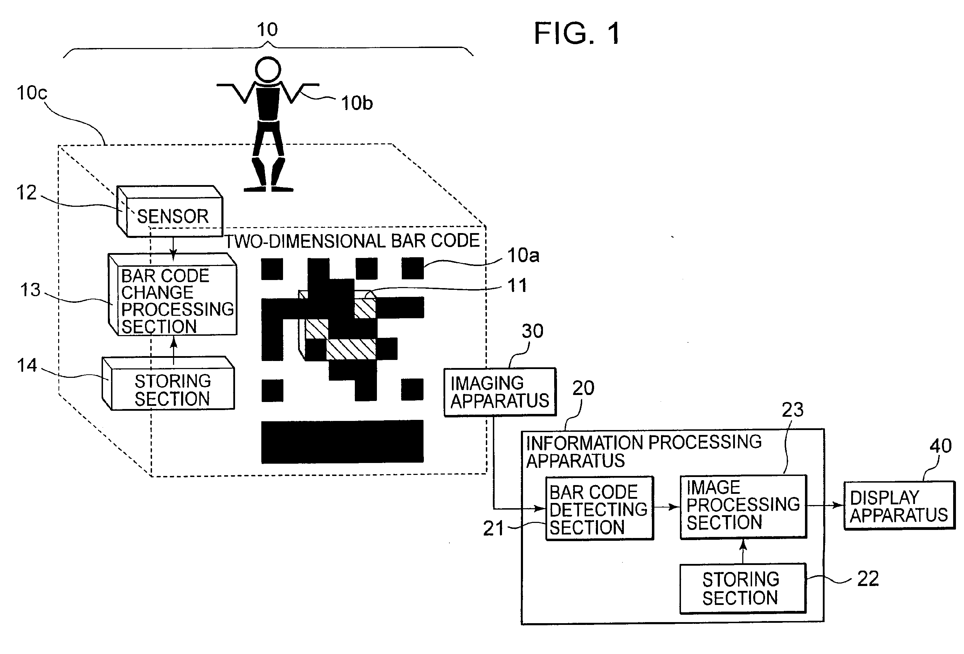

Fig. 1 is a diagram showing a general configuration of an information processing system of the present embodiment.
The information processing system of the present embodiment includes an object 10 for imaging, an information processing apparatus 20, an imaging apparatus 30, and a display apparatus 40.

The object 10 includes a two-dimensional bar code 10a, and a part of the bar code 10a is displayed on a display section 11 so that the bar code 10a can be changed. The display section 11 is, e.g., a liquid crystal display unit. Furthermore, the object 10 has a sensor 12 that detects various physical quantities such as temperature, a bar code change processing section (e.g., a CPU (Central Processing Unit)) 13 that changes a part of the two-dimensional bar code 10a displayed on the display section 11 according to a value obtained by the sensor 12, and a storing section (e.g., a ROM (Read Only Memory) such as a flash memory) 14 that stores changing patterns and the like.

It should be noted that the object 10 is a three-dimensional object, and is formed of, e.g., a doll 10b and a base 10c therefor, as shown in the figure. Here, the two-dimensional bar code 10a is arranged on the base 10c, and the display section 11, sensor 12, bar code change processing section 13, and storing section 14 are incorporated in the base 10c. However, if the doll 10b is large, it may be configured such that the two-dimensional bar code 10a is arranged on the doll 10b with the various functions incorporated in the doll 10b. Furthermore, while the two-dimensional bar code 10a is displayed only on a single surface of the base 10c here, the two-dimensional bar code 10a may be arranged on all the surfaces.

The two-dimensional bar code 10a has identification information (hereinafter called unique information) unique to the object 10, and identification information for designating a CG image to be created by the information processing apparatus 20.

In the object 10, by displaying only a part of the two-dimensional bar code 10a, the two-dimensional bar code 10a can be changed at a reduced cost. In the example of Fig. 1, nine boxes in the middle of the two-dimensional bar code 10a are made changeable by means of, e.g., a display with a liquid crystal device. Generally, a two-dimensional bar code uses, e.g., black boxes at the four corners to specify its position, and thus these boxes are always displayed black. Additionally, three boxes surrounding each of these black boxes are displayed white. Hence, it would not be wise to make changeable the two-dimensional bar code with these boxes included, from the viewpoint of cost. Thus, a changeable area is set freely from the first to thirty-third boxes.

Here, operation will be described which is performed in the object 10 if the two-dimensional bar code is changed.

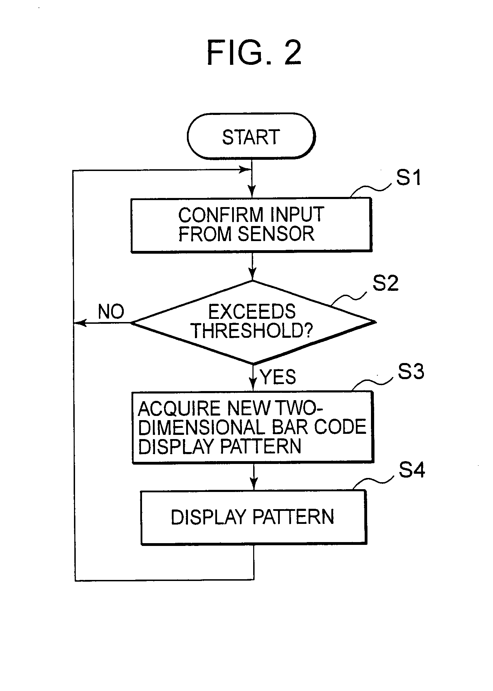

Fig. 2 is a flowchart illustrating two-dimensional bar code change processing.
When having confirmed an input from the sensor 12 (step S1), the bar code change processing section 13 determines whether the value exceeds a threshold or not (step S2). For example, if temperature is detected by the sensor 12, a certain temperature is set as the threshold beforehand, and the threshold temperature is exceeded or not is determined. If the value does not exceed the threshold here, step S1 is performed again. If the value exceeds the threshold, the bar code change processing section 13 acquires a new two-dimensional bar code display pattern from the storing section 14 (step S3), and displays the pattern on the display section 11 (step S4). The object 10 repeats processing such as above, and ends it, e.g., when a power switch (not shown) thereof has been turned off.

For changing the two-dimensional bar code 10a, various inputs may be applicable, besides an input from the sensor 12.
For example, a timer may be provided. Time is detected by the timer, and upon arrival of a preset time, a part of the two-dimensional bar code 10a may be changed. Alternatively, a GPS (Global Positioning System) unit may be provided. Information about the current position of the object 10 is detected by the GPS apparatus, and when the object 10 has entered a predetermined area, a part of the two-dimensional bar code 10a may be changed. Still alternatively, an imaging apparatus is provided. The surroundings of the object 10 are monitored by the imaging apparatus, and when a predetermined object has been imaged, a part of the two-dimensional bar code 10a may be changed.

Yet alternatively, a switch may be provided. A part of the two-dimensional bar code may be changed according to a state (on/off) of the switch. For example, in the case of a game, a two-dimensional bar code is changed according to a manipulation or a win/loss of the game. By doing so, it is possible to grow a character, or display a CG image of the character corresponding to the change, for example.

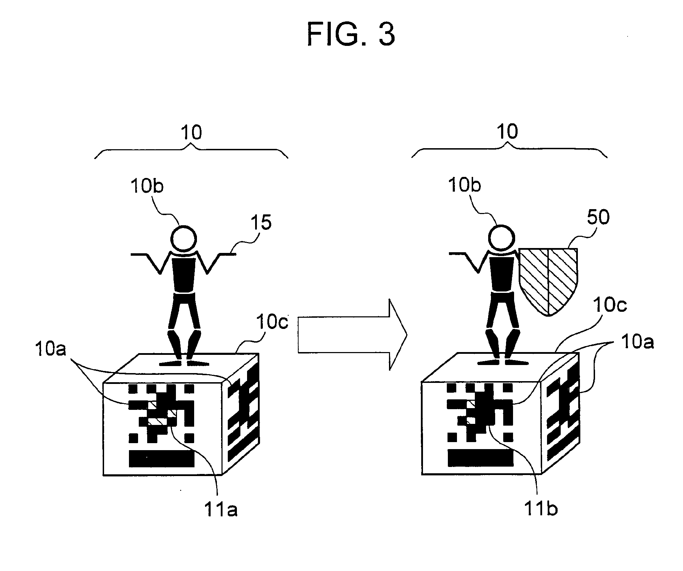

Fig. 3 is a diagram showing an example in which a two-dimensional bar code is changed by a switch.
As shown in the figure, a switch 15 is provided, e.g., on a hand of the doll 10b of the object 10, and by setting a shield 50 at the position, the switch 15 has been turned on. In response thereto, a display pattern 11 a of the two-dimensional bar code 10a is displayed, and then the display pattern 11 a is changed to a display pattern 11b.

Alternatively, it may be configured to combine a sensor, a switch, and the like such as mentioned earlier.

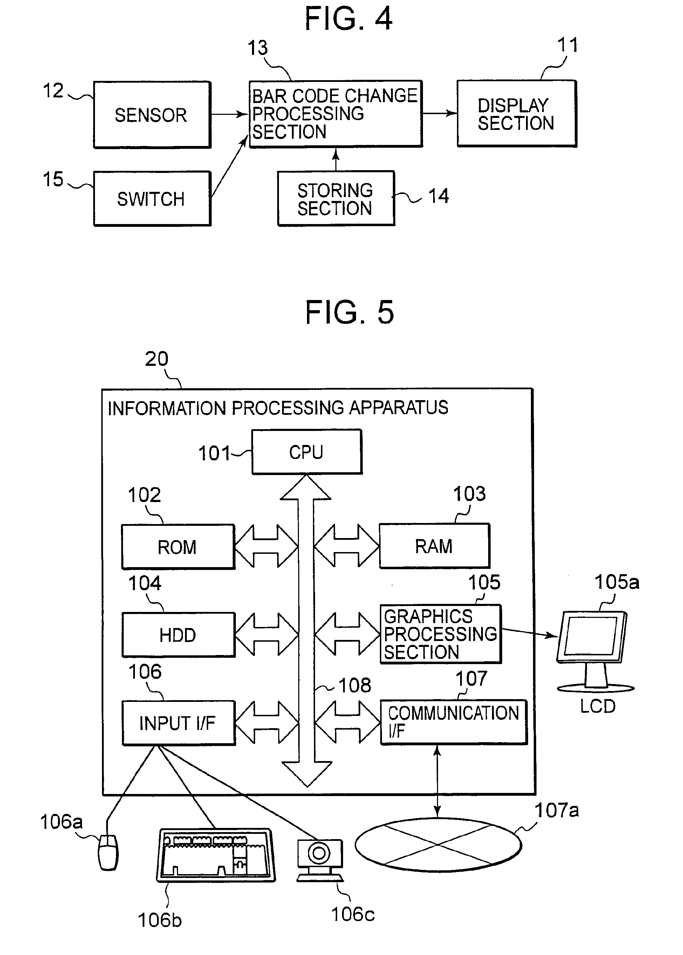

Fig. 4 is a diagram showing an example of function blocks of the object.
As shown in the figure, when the sensor 12 and the switch 15 are combined, a signal from the sensor 12 or the switch 15 is inputted to the bar code change processing section 13, and a new two-dimensional bar code display pattern stored in the storing section 14 is fetched for display on the display section 11, according to the value detected by the sensor 12 or the state of the switch 15.

Next, returning to Fig. 1, the information processing apparatus 20 will be described.
The information processing apparatus 20 has a bar code detecting section 21, a storing section 22, and an image processing section 23.
The bar code detecting section 21 detects the two-dimensional bar code 10a from a captured image of the object 10 imaged and captured by the imaging apparatus 30 such as a CCD (Charge Coupled Device) camera.

The storing section 22 stores CG image data to be displayed according to the detected two-dimensional bar code 10a.
The image processing section 23 reads the CG image data to be displayed from the storing section 22 according to the detected two-dimensional bar code 10a, and creates a CG image for output to the display apparatus 40 such as an LCD (Liquid Crystal Display).

Operation of the information processing apparatus 20 will be described below.
When the object 10 has been arranged at a predetermined position with respect to the imaging apparatus 30 and then imaging of the object 10 has been started, the information processing apparatus 20 captures a captured image obtained by the imaging, and then the bar code detecting section 21 detects the two-dimensional bar code 10a from the captured image. It should be noted that how the two-dimensional bar code itself is identified is disclosed in, e.g., Japanese Patent Application Publication No. 2000-82108 (Paragraphs Nos. [0055]-[0112]). Even when the two-dimensional bar code is skewed with respect to the imaging system, the bar code can be identified.

The image processing section 23 looks up the storing section 22 on the basis of unique information and identification information for designating a CG image to be displayed, contained in the detected two-dimensional bar code 10a, to fetch the CG image data and create a CG image, for output and display on the display apparatus 40. When the object 10 has changed the two-dimensional bar code 10a as mentioned earlier, the image processing section 23 fetches CG image data corresponding to the change from the storing section 22, and creates a CG image, for output and display on the display apparatus 40. For example, by changing the two-dimensional bar code 10a, the image processing section can transform or change a character, or put the character into action in CG representation.

In this way, according to the information processing system of the present embodiment, the two-dimensional bar code can be changed at a reduced cost, and a CG image corresponding to the change can be created. Furthermore, it is designed to detect a state of the object using the sensor, the switch, or the like whereby to change the two-dimensional bar code, and thus CG synthesis corresponding to the state of the object can be implemented.

Next, a specific hardware configuration example of the information processing apparatus 20 of the present embodiment will be described.
Fig. 5 is a hardware configuration example of the information processing apparatus.
The information processing apparatus 20 is, e.g., a PC (Personal Computer), and includes a CPU 101, a ROM 102, a RAM (Random Access Memory) 103, a HDD (Hard Disk Drive) 104, a graphics processing section 105, an input I/F (interface) 106, and a communication 1/F 107. These components are intercommunicated via a bus 108.

The CPU 101 controls various parts according to programs and various data stored in the ROM 102 and the HDD 104. And the CPU 101 also performs processing of identifying two-dimensional bar codes, and the like.

The ROM 102 stores basic programs executed by the CPU 101, and data.
The RAM 103 stores programs being currently executed and data being currently computed by the CPU 101.

The HDD 104 stores an OS (Operating System) and various application programs executed by the CPU 101, and various data such as CG image data.
The graphics processing section 105 has connected thereto, e.g., an LCD 105a as the display apparatus, to implement the function of the image processing section 23 of Fig. 1 jointly with the CPU 101. For example, the graphics processing section 105 displays a captured image, a CG image, and the like on the screen of the LCD 105a, e.g., according to a rendering command from the CPU 101.

The input I/F 106 has connected thereto a mouse 106a, a keyboard 106b, and an input unit such as a camera 106c that serves as the imaging apparatus 30 shown in Fig. 1. The input I/F 106 captures information inputted and a captured image, for transmission to the RAM 103 and the like via the bus 108, to make the transmitted information and the like usable by the CPU 101.

The communication I/F 107 connects to, e.g., a network 107a to implement communication with a server and a terminal on the network 107a:
Details of operation of the information processing apparatus 20 having a hardware configuration such as shown in Fig. 5 will be described with reference to a flowchart.

For example, when a user has arranged the object 10 within an imaging range of the camera 106c and when a program for identifying a two-dimensional bar code to create a CG image has been fetched from, e.g., the HDD 104 and executed, the CPU 101 performs below-shown processing according to the program.

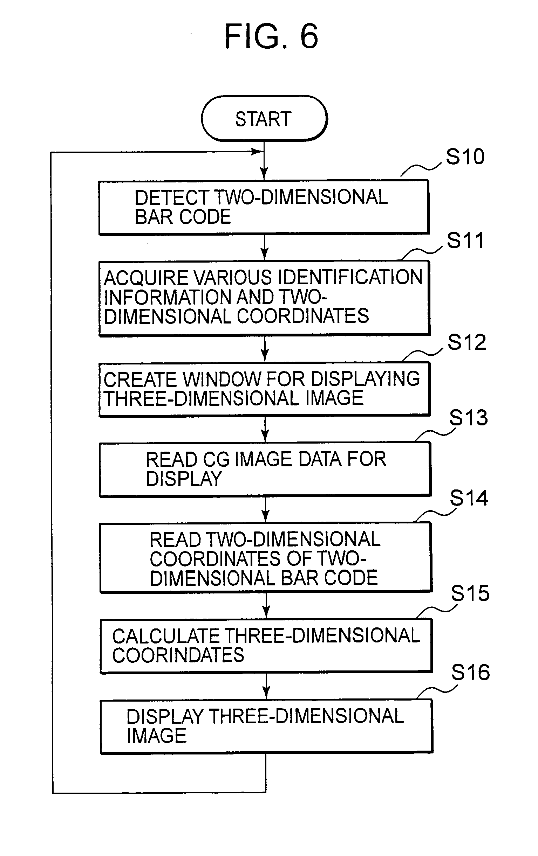

Fig. 6 is a flowchart for explaining the flow of the processing performed by the information processing apparatus.
When a captured image obtained by the camera 106c has been captured into the information processing apparatus 20 via the input I/F 106, the CPU 101 detects the two-dimensional bar code 10a from the captured image (Step S 10). Next, the CPU 101 identifies the two-dimensional bar code 10a to acquire unique information, information for identifying CG image data to be displayed, two-dimensional coordinates indicating the positions of the four corners of the two-dimensional bar code 10a, and the like (step S11). Thereafter, under control by the CPU 101, the graphics processing section 105 creates a window for displaying a three-dimensional image on the screen of the LCD 105a (step S 12). The CPU 101 reads the CG image data to be displayed from, e.g., the HDD 104, according to the unique information and the information for identifying the CG image data to be displayed which have been acquired (step S13). The CG image data to be displayed is, e.g., data (data described as an X file being a standard file format used by Microsoft Direct3D, or the like) for displaying a three-dimensional image corresponding to the object 10, information about an animation, and the like. Thereafter, the CPU 101 reads the two-dimensional coordinates of the two-dimensional bar code 10a, a focal distance of the camera 106c, and the like from, e.g., the RAM 103 (step S 14). The CPU 101 calculates three-dimensional coordinates for indicating the positions at which to display the CG-based three-dimensional image, by referencing the two-dimensional coordinates and the focal distance, which have been acquired (step S 15). And the graphics processing section 105 displays the three-dimensional image corresponding to the three-dimensional coordinates calculated by processing of step S15 under control by the CPU 101 (step S 16), after which the CPU 10 1 repeats the processing from step S10.

Even if the object 10 has changed the two-dimensional bar code 10a, the information processing apparatus 20 performs similar processing. However, the CG image data to be displayed which is read by processing of step S 13 is different from what has been read before the change. As a result of this, e.g., by changing the two-dimensional bar code, the character can be transformed, or changed, or put into action in CG representation.

In the meantime, in the above, a PC such as shown in Fig. 5 has been described as an example of the information processing apparatus 20. However, the information processing apparatus 20 is not limited to this, but may include game machines, portable telephones, PDAs (Personal Digital Assistants), and televisions having a CG image creating processing capability, all of which are ready for input from a camera.

Furthermore, the object may be realized by all types of objects, including figures, pieces used in games, and toys. Additionally, it is considered that data used for processing is supplied via all types of media (disc media, memories, network distribution, data broadcasting, and the like).

As described above, according to the information processing system of the present embodiment, a two-dimensional bar code can be changed at a reduced cost, and a CG image corresponding to the change can be created. Furthermore, since it is configured to detect a state of the object by the sensor, the switch, or the like whereby to change the two-dimensional bar code, CG-based synthesis corresponding to the state of the object can be implemented.

The above-mentioned processing can be implemented by a computer. In that case, a program is provided, in which the processing based on the functions which the information processing apparatus 20 should have is described. By executing the program on the computer, the processing functions are implemented on the computer. The program in which the processing is described can be recorded on a computer-readable recording medium. The computer-readable recording medium includes a magnetic recording unit, an optical disc, a magneto-optical recording medium, and a semiconductor memory. The magnetic recording unit includes a hard disk drive (HDD), a flexible disc (FD), and a magnetic tape. The optical disc includes a DVD (Digital Versatile Disk), a DVD-RAM, a CD-ROM, and a CD-R (Recordable)/RW (ReWritable). The magneto-optical recording medium includes a MO (Magneto-Optical disk).

In a case where the program is to be distributed, e.g., a portable recording medium such as a DVD or a CD-ROM on which the program is recorded is marketed. It may also be possible to store the program in a storing apparatus of a server computer and transmit the program to other computers from the server computer via a network.

The computer that executes the program stores the program recorded on the portable recording medium or the program transmitted from the server computer in its own storing unit. And the computer reads the program from its own storing unit, and executes the processing that follows the program. It should be noted that the computer could read the program directly from the portable recording medium, and execute the processing that follows the program. Furthermore, the computer can also execute the processing that follows the program received consecutively, every time the program is transmitted from the server computer.

## Claims

1. An information processing system that identifies a two-dimensional bar code and displays a computer graphics image, **characterized by** comprising:
an object that has the two-dimensional bar code arranged thereon and has a display section thereon for displaying and making part of the two-dimensional bar code changeable; and
an information processing apparatus that detects the two-dimensional bar code from a captured image obtained by imaging the object, creates and outputs a computer graphics image corresponding to the two-dimensional bar code, and if the object changes the two-dimensional bar code, creates and outputs a computer graphics image corresponding to the change.

2. An object on which a two-dimensional bar code is arranged, **characterized by** comprising
a display section thereon for displaying and making part of a two-dimensional bar code changeable.

3. The object according to Claim 2, **characterized in that**:
the display section is a display of the part of the two-dimensional bar code with a liquid crystal device.

4. The object according to Claim 2, **characterized by** further comprising:
a sensor;
wherein various physical quantities are detected by the sensor, and the part of the two-dimensional bar code is changed if a predetermined value is detected.

5. The object according to Claim 2, **characterized by** further comprising:
a timer;
wherein time is detected by the timer, and the part of the two-dimensional bar code is changed if the time reaches a predetermined time.

6. The object according to Claim 2, **characterized by** further comprising:
a GPS apparatus;
wherein current position information is detected by the GPS apparatus, and the part of the two-dimensional bar code is changed if the object enters a predetermined area.

7. The object according to Claim 2, **characterized by** further comprising:
an imaging apparatus;
wherein surrounding of the object is monitored by the imaging apparatus, and the part of the two-dimensional bar code is changed if a predetermined object is imaged.

8. The object according to Claim 2, **characterized by** further comprising:
a switch;
wherein the part of the two-dimensional bar code is changed according to a state of the switch.

9. An information processing apparatus that identifies a two-dimensional bar code and displays a computer graphics image, **characterized by** comprising:
bar code detecting means for detecting the two-dimensional bar code from a captured image obtained by imaging an object, the object including the two-dimensional bar code arranged thereon and a display section thereon for displaying and making part of a two-dimensional bar code changeable; and
image processing means for creating and outputting a computer graphics image corresponding to the two-dimensional bar code, and a computer graphics image corresponding to the change if the object changes the two-dimensional bar code.

10. The information processing apparatus according to Claim 9, **characterized in that**:
the display section is a display of the part of the two-dimensional bar code with a liquid crystal device.

11. The information processing apparatus according to Claim 9, **characterized in that**:
the object has a sensor, detects various physical quantities by the sensor, and changes the part of the two-dimensional bar code if a predetermined value is detected.

12. The information processing apparatus according to Claim 9, **characterized in that**:
the object has a timer, detects time by the timer, and changes the part of the two-dimensional bar code if the time reaches a predetermined time.

13. The information processing apparatus according to Claim 9, **characterized in that**:
the object has a GPS apparatus, detects current position information by the GPS apparatus, and changes the part of the two-dimensional bar code if the object enters a predetermined area.

14. The information processing apparatus according to Claim 9, **characterized in that**:
the object has an imaging apparatus, monitors surrounding thereof by the imaging apparatus, and changes the part of the two-dimensional bar code if a predetermined object is imaged.

15. The information processing apparatus according to Claim 9, **characterized in that**:
the object has a switch, and changes the part of the two-dimensional bar code according to a state of the switch.

16. An information processing method for identifying a two-dimensional bar code and displays a computer graphics image, **characterized by** comprising:
detecting the two-dimensional bar code from a captured image obtained by imaging an object, the object including the two-dimensional bar code arranged thereon and a display section thereon for displaying and making part of a two-dimensional bar code changeable; and
creating and outputting a computer graphics image corresponding to the two-dimensional bar code, and a computer graphics image corresponding to the change if the object changes the two-dimensional bar code.

17. A program that causes a computer to function so as to perform processing for identifying a two-dimensional bar code and displays a computer graphics image, the program causing the computer to function as:
bar code detecting means for detecting the two-dimensional bar code from a captured image obtained by imaging an object, the object including the two-dimensional bar code arranged thereon and a display section thereon for displaying and making part of a two-dimensional bar code changeable; and
image processing means for creating and outputting a computer graphics image corresponding to the two-dimensional bar code, and a computer graphics image corresponding to the change if the object changes the two-dimensional bar code.

18. A computer-readable recording medium having recorded thereon a program that causes a computer to function so as to perform processing for identifying a two-dimensional bar code and displays a computer graphics image, the computer-readable recording medium causing the computer to function as:
bar code detecting means for detecting the two-dimensional bar code from a captured image obtained by imaging an object, the object including the two-dimensional bar code arranged thereon and a display section thereon for displaying and making part of a two-dimensional bar code changeable; and
image processing means for creating and outputting a computer graphics image corresponding to the two-dimensional bar code, and a computer graphics image corresponding to the change if the object changes the two-dimensional bar code.
